# EUROPEAN PATENT APPLICATION

(11) **EP 4 484 127 A1**
(43) Date of publication of application: **01.01.2025**
(21) Application number: 24185781.2
(22) Date of filing: 01.07.2024
(51) Int. Cl.: B29C 64/153, B22F 5/10, B22F 10/28, B22F 12/13, B22F 12/37, B22F 12/45, B22F 12/70, B29C 64/241, B29C 64/245, B29C 64/282, B29C 64/357, B33Y 10/00, B33Y 30/00

(54) **POWDER BED FUSION ADDITIVE PRINTER WITH INTEGRATED INSPECTION**

(30) Priority: 30.06.2023 US 202363511482 P; 30.06.2023 US 202363511474 P; 30.06.2023 US 202363511479 P; 30.06.2023 US 202363511486 P; 10.08.2023 US 202363518741 P
(71) Applicant: RTX Corporation, Farmington, CT 06032 (US)
(72) Inventor: BINEK, Lawrence A., East Hartford, 06118 (US); BOYER, Jesse R., East Hartford, 06118 (US)
(74) Representative: Dehns

(57) **Abstract**

A powder bed fusion (PBF) additive manufacturing system includes an annular build plate (22) including an inner radius wall (26a) and an outer radius wall (26b), wherein the inner radius wall (26a) and the outer radius wall (26b) define a build area (26c) on the annular build plate (22) between the inner radius wall (26a) and the outer radius wall (26b). A build piston is configured to rotate around a drive shaft in a continuous circular motion and to translate up and down with respect to the annular build plate (22), wherein the annular build plate (22) is configured to be positioned on the build piston and to move in concert with the build piston (28). A build powder delivery mechanism is configured to deliver build powder to the build area (26c) to form a build powder bed (50) when the PBF additive manufacturing system (20) is in operation. A recoater is configured to provide even distribution of the build powder in the build powder bed when the PBF additive manufacturing system (20) is in operation. An optical array is positioned over the build area (26c) on the build plate (22), wherein the optical array is configured to project energy onto the build powder bed to form a melt pool in the build powder bed when the PBF additive manufacturing system (20) is in operation. An integrated X-ray CT system (34) is positioned operationally downstream from the optical array such that the integrated X-ray CT system (34) is configured to inspect a part (24) formed on the build plate (22) when the PBF additive manufacturing system (20) is in operation.

## Description

### BACKGROUND

The present invention relates generally to powder bed fusion additive manufacturing and, more particularly, to a powder bed fusion additive manufacturing printer architecture with integrated inspection.

Powder bed fusion (PBF) additive manufacturing is an additive manufacturing, or 3-D printing, technology that uses a laser or other energy source such as an electron beam to sinter or fuse metallic or polymeric particles together in a layer-by-layer process. PBF is typically used as an industrial process to make near net shape parts. Some PBF processes sinter the build powder particles, while others melt and fuse the build powder particles. Laser powder bed fusion (PBF-LB) is also known as direct metal laser sintering (DMLS).

Build plates serve as a foundation upon which a PBF build (i.e., the "workpiece" or "part") is built. Build plates for PBF additive manufacturing systems typically have a rectangular or square geometry, which provides the flexibility to support a wide variety of build shapes. As parts being made with PBF additive manufacturing processes get bigger, though, rectangular or square build plates present some disadvantages for builds having an annular shape, primarily the volume of unconsolidated (i.e., unused) powder that accumulates in the central opening of the annular-shaped build. While it might be possible to reuse the unconsolidated powder for other purposes, reuse can be cumbersome. Accordingly, the relatively large amount of unconsolidated powder associated with annular-shaped builds represents a "waste" factor in the manufacturing process that would be preferable to avoid.

### SUMMARY

According to an aspect of the invention a powder bed fusion (PBF) additive manufacturing system includes an annular build plate including an inner radius wall and an outer radius wall, wherein the inner radius wall and the outer radius wall define a build area on the annular build plate between the inner radius wall and the outer radius wall. A build piston is configured to rotate around a drive shaft in a continuous circular motion and to translate up and down with respect to the annular build plate, wherein the annular build plate is configured to be positioned on the build piston and to move in concert with the build piston. A build powder delivery mechanism is configured to deliver build powder to the build area to form a build powder bed when the PBF additive manufacturing system is in operation. A recoater is configured to provide even distribution of the build powder in the build powder bed when the PBF additive manufacturing system is in operation. An optical array is positioned over the build area on the build plate, wherein the optical array is configured to project energy onto the build powder bed to form a melt pool in the build powder bed when the PBF additive manufacturing system is in operation. An integrated X-ray CT system is positioned operationally downstream from the optical array such that the integrated X-ray CT system is configured to inspect a part formed on the build plate when the PBF additive manufacturing system is in operation.

According to another aspect of the invention a method of making an annular part with a powder bed fusion (PBF) additive manufacturing system includes installing in the PBF additive manufacturing system an annular build plate including an inner radius wall and an outer radius wall, which define a build area on the annular build plate between the inner radius wall and the outer radius wall. A powder delivery mechanism delivers build powder to the build area to form a build powder bed while the build plate rotates. A recoater distributes the build powder in the build powder bed to provide even distribution of the build powder in the build powder bed while the build plate rotates. An optical array positioned over the build area on the build plate directs energy to the build powder in the build powder bed to form a melt pool in the build powder bed while the build plate rotates. Build powder from the melt pool is selectively sintered using energy from the optical array to form a layer of a consolidated part while the build plate rotates. The consolidated part is inspected with an integrated X-ray CT system in situ as it forms.

### BRIEF DESCRIPTION OF THE DRAWINGS

Fig. 1 is an illustration of one type of annular-shaped build that can be made with a powder bed fusion (PBF) additive manufacturing system.
Fig 2 is an overhead schematic of a PBF additive manufacturing system having an annular-shaped build plate.
Fig 3 is an elevation schematic of a PBF additive manufacturing system having an annular-shaped build plate.
Fig. 4 is a schematic of a build head for use in a PBF additive manufacturing system having an annular-shaped build plate.
Fig. 5 is a schematic of an optical head array for use in a PBF additive manufacturing system having an annular-shaped build plate of the present invention.
Fig. 6 is a graph showing a zone of preferred operating conditions for a PBF additive manufacturing system having an annular-shaped build plate.
Fig. 7 is a schematic of an integrated X-ray CT scanner for use in a PBF additive manufacturing system having an annular-shaped build plate.
Fig. 8 is a schematic representation of a part built using conventional, layer-by-layer PBF additive manufacturing process.
Fig. 9 is another schematic representation of a part built using conventional, layer-by-layer PBF additive manufacturing process.
Fig. 10 is a schematic representation of a part built using the disclosed, continuous helical layer PBF additive manufacturing process.
Fig. 11 is another schematic representation of a continuous helical layer formed with the disclosed PBF additive manufacturing process.

### DETAILED DESCRIPTION

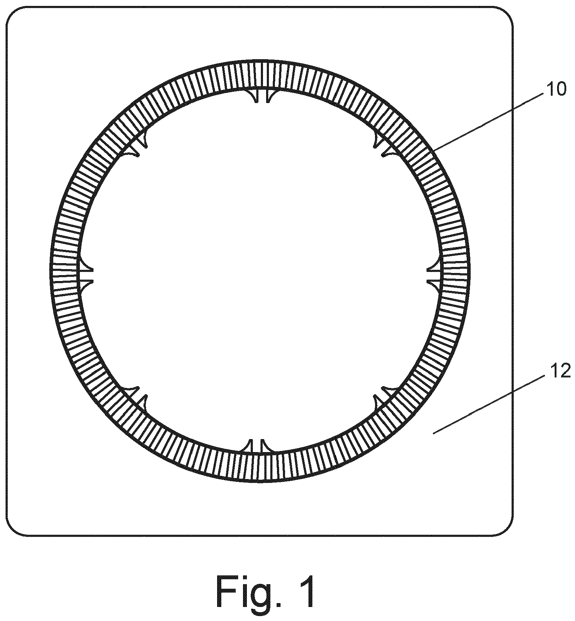

Powder bed fusion (PBF) additive manufacturing is an option to make near net shape parts with various geometries. Parts having an annular shape-particularly those with relatively large diameters can be a challenge. Examples of such annular-shaped parts include parts for gas turbine engines (e.g., compressor stages, turbine stages, combustor cans and combustion chambers, cases, etc.), other aerospace applications, and numerous commercial applications. Fig. 1 shows a nonlimiting, exemplary gas turbine engine compressor stage **10** made using a PBF additive manufacturing process. Parts such as the gas turbine engine compressor stage **10** and other parts can be valuable for original equipment assemblies and for in-service sustainment requirements. Generally, annular-shaped parts, such as the gas turbine engine compressor stage **10**, can be printed in their entirety in a large format PBF additive manufacturing machine. Because the part envelope of conventional large format machines is typically rectangular or square shaped with correspondingly shaped rectangular or square build plates **12**, such machines are not ideal for annular-shaped parts because the annulus of annular-shaped parts results in a large area of unconsolidated build powder within the annular ring. Depending on the PBF additive manufacturing process used to make such parts, the large area of unconsolidated build powder can end up being "wasted," which drives up the expense of making such parts with conventional PBF additive manufacturing methods. Accordingly, there is often not a business case to support using conventional PBF additive manufacturing methods for annular-shaped parts.

In addition to challenges with efficient use of build powder when using conventional PBF additive manufacturing methods for annular-shaped parts, the cycle time for large format conventional PBF additive manufacturing systems can be challenging. The architecture of conventional PBF additive manufacturing systems requires that the energy source (e.g., laser or electron beam) track the rectilinear cartesian coordinates of the part on the rectangular or square build plates. For annular-shaped parts, this means that the energy source in a conventional PBF additive manufacturing system spends significant time tracking over portions of the build powder bed that will not be consolidated to make the annular-shaped parts. As a result, a significant portion of the build time for such parts is non-productive in that the energy source is tracking over the build powder bed without consolidating any of the build powder. The large amount of non-productive build time is another type of "waste" that further drives up the expense of making such parts with conventional PBF additive manufacturing methods.

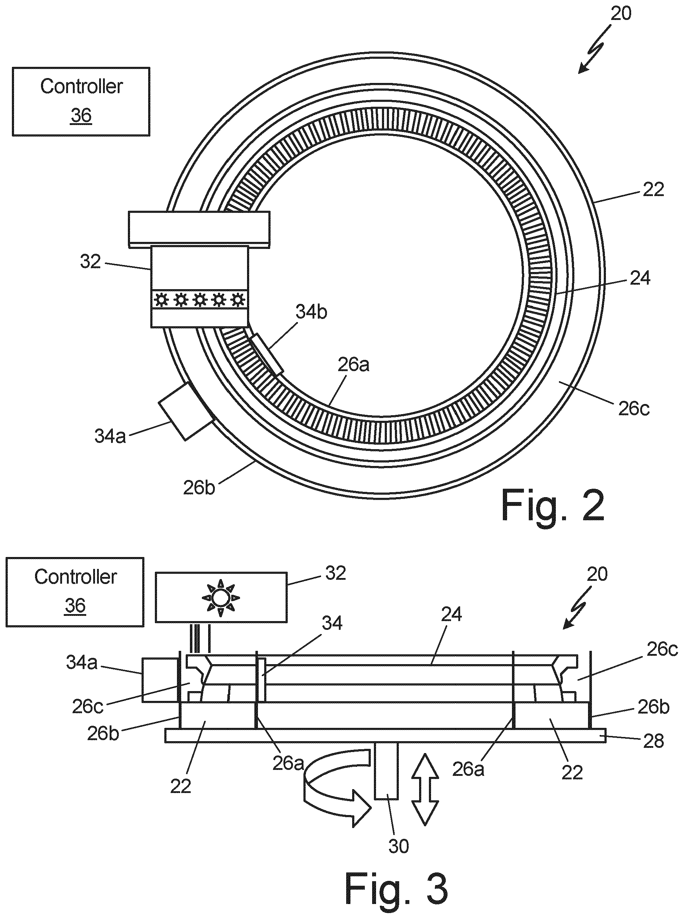

As shown in Figs. 2 and 3, this application discloses a PBF additive manufacturing system **20** that replaces the conventional rectangular or square build plate with a rotating annular build plate **22** for making annular-shaped parts **24**. The rotating annular build plate **22** is surrounded by walls **26**, including inner radius walls **26a** and outer radius walls **26b**, to define a build area **26c** that contains a powder bed (not shown) of build powder during the PBF additive manufacturing process and positioned on a build piston **28**, which includes shaft **30**. The build piston **28** is configured to rotate around the shaft **30** in a continuous circular motion and to translate down as the PBF additive manufacturing process progresses to form part **24**. The build plate **22** moves in concert with the build piston **28**. The rotation and downward translation of the build piston **28** and build plate **22** allows for the part **24** to build up without stepping or interruption. As described in more detail the below, the part **24** can be formed from a continuous, helical layer of consolidated build powder that overlays itself as the part **24** is built.

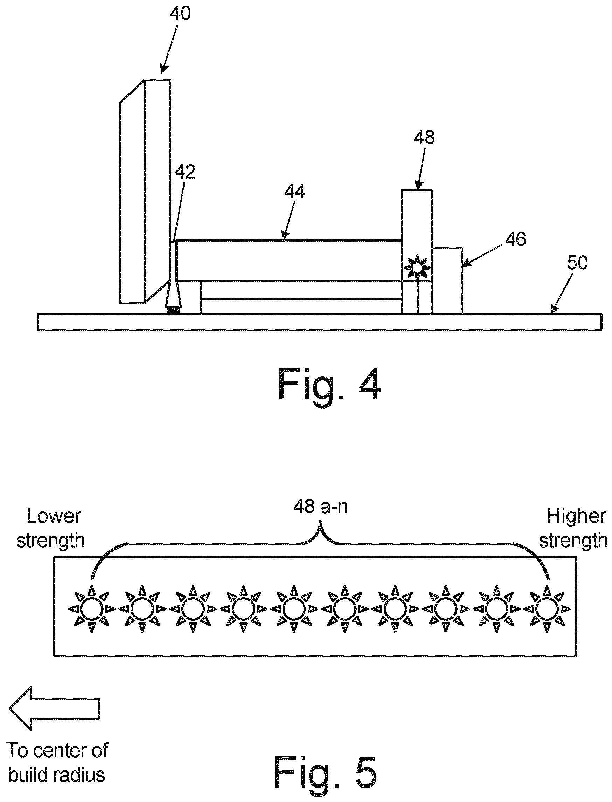

The PBF additive manufacturing system **20** can also include a multi-function build head **32** positioned at a predetermined height over the build area **26c** that includes a powder delivery mechanism, a recoater, a build powder preheater, a gas manifold, and an optical array as described in more detail below (see Figs. 4 and 5). Alternately, each element of the multi-function build head **32** can be provided independently or as separate sub-assemblies. The multi-function build head **32** can be a static component that covers the operating radius of the build plate **22** (i.e., build area **26c**, which is across the entire space between the walls **26** of the build plate **22**) while the build plate **22** rotates and/or can be configured to translate up and down (i.e., in the z-axis) to maintain a desired distance between the multi-function build head **32** and the top layer of the build powder bed in the build area **26c** as the build campaign progresses. Additionally, the multi-function build head **32** can also be configured to translate radially across the build area **26c** to provide complete coverage of the build area **26c**. Regardless of configuration, the build head **32** covers the full build area **26c** of the build plate **22** as the build plate **22** rotates and translates down as described above. Although only a single build head **32** is shown in Figs. 2 and 3, any number of build heads **32** can be used in a particular PBF additive manufacturing system **20.** For example, a PBF additive manufacturing system **20** consistent with this disclosure can include 2, 3, 4, or even more build heads **32** spaced at selective intervals. While each of the multiple build heads **32** may be spaced at regular intervals, the build heads may also be spaced at irregular intervals if such a spacing is deemed advantageous. Additionally, a PBF additive manufacturing system **20** consistent with this disclosure can be configured such that the number of build heads **32** can be changed between build campaigns. For example, a single build head **32** can be used for a first build campaign, 3 build heads **32** (or any other number of build heads **32**) can be used for a subsequent second build campaign, and so on. The number of build heads **32** used for a particular build campaign can be determined based on the dimensions, complexity, build powder material, and other considerations for the part **24** to be built during the build campaign.

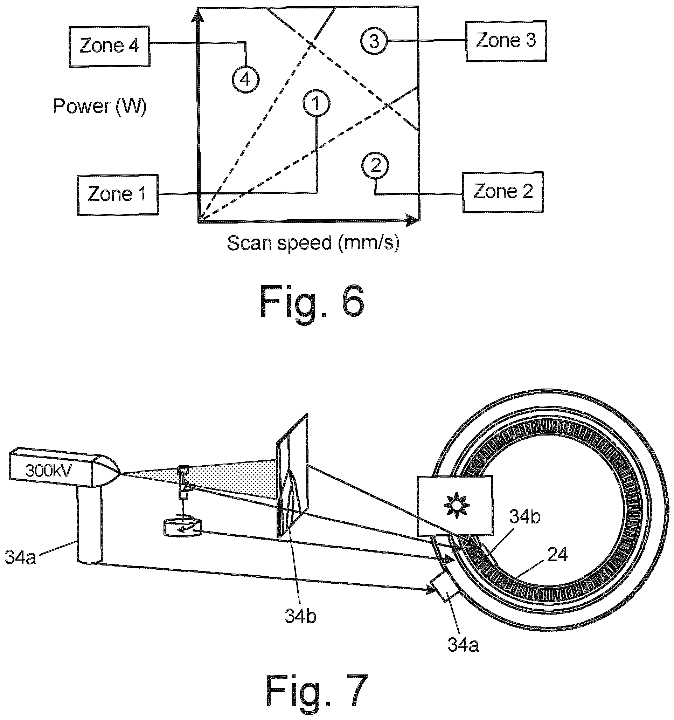

The PBF additive manufacturing system **20** can also include an x-ray computed tomography (CT or CAT) scan system **34**, including scan head **34a** and detector **34b**, as described in more detail below (see Fig. 7) to integrate a continuous inspection process into the disclosed PBF additive manufacturing process. Although only single CT scan system **34** is shown in Figs. 2 and 3, two, three, or more of any number of CT scan systems **34** can be incorporated in a particular PBF additive manufacturing system **20**.

As discussed further below, the PBF additive manufacturing system **20** also includes a controller **36**.

Fig. 4 is a more detailed schematic of the multi-function build head **32** discussed above. The multi-function build head **32** provides a number of capabilities that enable the use of annular build plate **22** in a PBF additive manufacturing system **20**.The build head **32** includes a powder dispensing mechanism **40**, recoater **42**, powder heating element **44**, gas manifold **46**, and optical array **48**, which includes an energy source such as a laser or electron beam source. As discussed above, the build head **32** can remain stationary as the annular build plate **22** rotates, can be configured to translate up and down (i.e., in the z-axis) to maintain a desired distance between the multi-function build head **32** and the build powder bed **50** as the build campaign progresses, and/or can be configured to translate radially across the build area **26c**. Translating the build head **32** and the optical array **48** in the z-axis and/or radially across the build area **26c** can contribute to repeatable consolidation of the part **24**.

The powder dispensing mechanism **40** is configured to distribute additional build powder over the part **24** after each portion of the continuous, helical layer is formed on the part **24** in a manner similar to the distribution of build powder in conventional PBF additive manufacturing systems. The recoater **42** spreads the build powder distributed by the powder dispensing mechanism **40** evenly across the powder bed **50** so that each portion of the continuous, helical layer of the part **24** has a desired (stacking axis) thickness. As discussed further below, due to the continuous rotation of the annular build plate **22** the continuous, helical layer of part **24** is deposited in a 2D plane having a pitch that reflects the build layer height. The powder heating element **44** heats unconsolidated build powder to facilitate complete, pore-free consolidation of the build powder. Each of the powder dispensing mechanism **40,** recoater **42**, and powder heating element **44** can be configured to operate similar to their counterparts in conventional PBF additive manufacturing systems.

The optical array **48** can include one or more energy sources (**48a-n**) to provide energy to form a melt pool (not shown) in the powder bed **50** that is selectively sintered and consolidated to form the continuous, helical layer of the part **24**. The individual energy sources **48a-n** can be lasers, such as laser diodes, electron beam sources, or other appropriate energy sources. For many applications, it may be desirable for the optical array **48** to include a plurality of energy sources **48a-n** to provide coverage for the entire operative radius of the build plate **22** (i.e., across the entire space between the walls **26** of the build plate **22**). As discussed further below, each of the plurality of energy sources **48a-n** should be tuned with respect to the radial location of the individual energy sources **48a-n** to maintain a consistent melt pool across the radius (i.e., the full build area **26c**) of the annular build plate **22.**

The gas manifold **46** blows an inert gas across the optical array **48** to diffuse the soot generated from the consolidated material. The inert gas may be nitrogen or any other inert gas suitable for the PBF additive manufacturing environment. The gas manifold **46** should be positioned to dispense inert gas to mitigate contamination to the optical array **48** and melt pool from soot or airborne build powder.

Fig. 5 shows a schematic of the optical array **48** in more detail, including individual energy sources **48a-n**. Although, Fig. 5 shows ten individual energy sources, any number ("n") of individual energy sources may be used-hence, this application uses the nomenclature **48a-n** to represent the individual energy sources. The plurality of individual energy sources **48a-n** are distributed radially over the build area **26c** of the build plate **22** such that the individual energy sources **48a-n** irradiate overlapping portions of the build area **26c**. The individual energy sources **48a-n** may be lasers, such as laser diodes, electron beam sources, or any other energy sources deemed appropriate for use in the PBF additive manufacture system **20**. The rotating annular build plate **22** creates a demanding challenge for the optical array **48** due to the varying tangential velocity of the powder bed **50** across the radius of the build plate **22**. As can be appreciated, when the annular build plate **22** rotates at a constant velocity the tangential velocity at the inner radius of the powder bed **50** is slower than at the outer radius of the powder bed **50**. If the optical array **48** is configured to deliver constant power across the powder bed **50**, the powder bed **50** will experience more effective energy at the inner radius than at the outer radius. This phenomenon could result in an inconsistent melt pool across the powder bed **50** radius, leading to inconsistent consolidation of the part **24** across the powder bed **50** radius. Accordingly, the power of the energy sources **48a-n** in the optical array **48** should be scaled with respect to radial location to maintain constant effective energy density delivery across the radius of the powder bed **50**. This mean that the individual energy sources **48a-n** in the optical array **48** will have differing power as a function of the location within the optical array **48**. Thus, as shown in Fig. 5, individual energy sources closer to the center of the build radius (i.e., closer to the inner radius of the powder bed **50**) should be configured to operate at a lower energy level than individual energy sources further from the center of the build radius (i.e., closer to the outer radius of the powder bed **50**).

To accommodate the rotational speed of the annular build plate **22,** the operating strength for each individual energy source **48a-n** in the optical array **48** should be determined based on the rotational speed of the annular build plate **22** and the specific geometry of the part **24** to be built during a specific build campaign. Fig. 6. Shows a notional zone of desirable operating conditions for energy source power versus scan speed of a PBF additive manufacturing system **20** having an annular-shaped build plate **26**. Because the multi-function build head **32** and the optical array **48** are generally stationary with regard to the rotating plane of the annular build plate **22**, the energy source scan speed should be understood to be the tangential velocity of the build powder bed **50** at the radial location within the "view" of each individual energy source **48a-n** in the optical array **48**. Fig. 6 shows four zones of potential operation for the energy sources in the optical array **48**:
- Zone 1: the desired operating zone in which the energy source power is tuned to deliver a desired amount of energy based on scan speed (i.e., local tangential velocity) to melt and fuse the build powder to form fully consolidated layers (the "Just Right" zone)
- Zone 2: a zone in which the energy source delivers insufficient energy too quickly in view of the scan speed (i.e., local tangential velocity) such that the local conditions are too cold for desirable melting and fusing of the build powder and layers (the "Too Cold" zone)
- Zone 3: a zone in which the scan speed (i.e., local tangential velocity) is too fast to allow the build powder to absorb the energy source energy being delivered to the powder bed, leading to undesirable melting and fusing of the build powder and layers (the "Too Fast" zone)
- Zone 4: a zone in which the energy source delivers too much energy in view of the scan speed (i.e., local tangential velocity) such that the local conditions are hot for desirable melting and fusing of the build powder and layers (the "Too Hot" zone)
As can be appreciated, each energy source **48a-n** in the optical array **48** should be tuned to operate within Zone 1 based on the parameters of each specific build campaign.

Fig. 7 is a schematic of an integrated X-ray computed tomography (CT or CAT) scan system **34**, including an X-ray emitter or X-ray scan head **34a** and an X-ray detector **34b**, for use in a PBF additive manufacturing system **20** having an annular-shaped build plate **22**. The X-ray scan head **34a** includes an X-ray source of suitable power to penetrate the part **24** and side walls **26** of the build plate **22**. For example, X-ray source may be 300 kV or any other power level deemed appropriate for the application. The X-ray detector **34b** can be any suitable x-ray detector useful in an X-ray CT system that provides sufficient resolution to provide desired information about the part **24** as it progresses through the build campaign. The integrated X-ray CT system **34** works by having an X-ray scan head **34a** located after the build head **32** (i.e., "downstream" of the build head **32** in the annular build plate's **22** direction of rotation) on the outer diameter of the annular build plate **22** with an X-ray detector **34b** on the inner diameter with a linear path intersecting the part **24** such that the X-ray scan head **34a** directs X-ray energy through the part **24** to the X-ray detector **34b**. If the PBF additive manufacturing system **20** includes more than one build head **32**, the PBF additive manufacturing system **20** can include a single X-ray CT system **34** positioned at an advantageous location with regard to the build plate **22** or may include one or more X-ray CT system **34**. The X-ray detector **34b** receives X-ray energy as it exits the part **24** to form an image of part **24** that can be examined manually or automatically for defects. The X-Ray CT system **34** is able to perform imaging of the part **24** in-situ during the build campaign as the annular build plate **22** rotates. If the X-Ray CT system **34** detects defects in the part **24** during the build campaign, the operator can be presented with various options to be implemented manually or automatically through controller **36**. These options include varying the build campaign operating parameters as discussed below (e.g., power to individual energy sources **48a-n**, rotational speed and/or height of the annular build plate **22**, translation of the build head **32**, operation of the powder dispensing mechanism **40**, operation of the powder heating element **44**, or any other operating parameters) to account for the identified defect(s) in the part **24** or, if the defect is serious enough, terminating the build campaign and manually reworking the part **24** or even scrapping the part **24**.

The X-Ray CT scanning can also be decoupled from the build process if a final high-resolution scan needs to be taken once excess build powder has been evacuated from the part 24 but with the part **24** still affixed to the annular build plate **22**. The post-build X-Ray CT scan could take place at a slower speed and/or higher resolution than might be convenient for the in-process scans discussed above and could form a portion of the final inspection of the part **24**. Such an operation permits both in-process inspection of the part **24** during the build campaign and post-build inspection for of the part **24**.

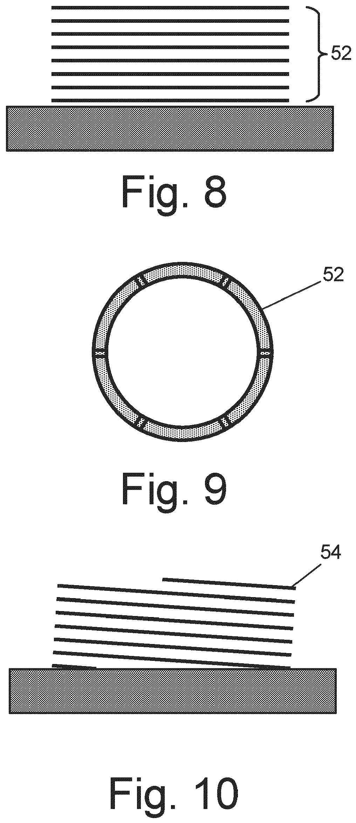

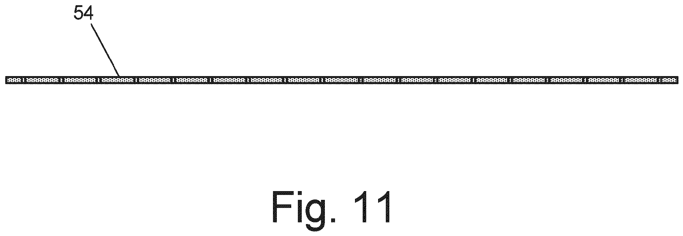

Using a rotating, annular build plate **22** as disclosed results in a unique layer structure in the part **24** compared with parts made with conventional PBF additive manufacturing processes. With a conventional PBF additive manufacturing systems, parts have a "stacked" layer configuration as shown schematically in Fig. 8 ("stacked" layers **52**) and Fig. 9 (an overhead view of a single layer **52**) in which a plurality of individual layers **52** are stacked and consolidated. Each of the plurality of individual layers **52** is oriented "parallel" with the build plate **22** on which the part **24** is formed. Using the disclosed PBF additive manufacturing system **20** with rotating, annular build plate **22** coupled with timed ascent or descent of the build head **32** or annular build plate **22**, respectively, the part **24** has a continuous, single layer **54** that is "pitched" with respect to the build plate **22** on which the part **24** is formed. As shown schematically in Fig. 10, the continuous, single layer **54** is helically overlapped on itself across the entire (stacking axis) thickness of the part **24** as a result of the continually rotating build plate **22**. The pitch of the continuous, single layer **54** is determined by the height of the build powder layer used for a particular portion of the build campaign and the rotational speed of the rotating, annular build plate **22**. If "unwrapped," the single, helically-distributed layer **54** would form a continuous linear ribbon as shown in Fig. 11. Conceptualizing the single, helically-distributed layer **54** as a continuous linear ribbon can help define the tool path required for the optical array **48** to consolidate the build powder effectively. The curvature of the part **24** is handled by the rotation of the annular build plate **22** and is not part of the energy source scan consideration when determining appropriate power levels for individual energy sources **48a-n** in the optical array **48**. The single, helically-distributed layer **54** of part **24** should be detectible after consolidation as an artifact of the disclosed PBF additive manufacturing process.

Although not a focus of this disclosure, a person of ordinary skill will recognize that the disclosed PBF additive manufacturing system **20** relies on a controller **36** to control the rotation and height of the annular build plate **22** by rotating and translating the build station piston **28**, which in turn controls the local thickness and pitch of the continuous, helical layer that forms the part **24**. Controller **36** also controls the operation the build head **32**, including the dispensing of build powder from powder dispensing mechanism **40** and the operation of the powder heating element **44**, gas manifold **46**, and optical array **48** as discussed above. For example, the controller **36** controls PBF system **20** operating parameters, including:
(1) energy source power, velocity, and spot size, build plate temperature, and layer thickness;
(2) temperature-dependent thermophysical properties of the powder;
(3) feedstock properties including average powder particle size; and
(4) energy source hatching strategy including hatch distance, hatch delay time, and stripe width.

The PBF system **20** can be used with a variety of build powders to produce part **24**. For example the powder can be a metal powder or polymeric powder. Metallic powders compatible with typical PBF systems **20** include aluminum, aluminum alloys (e.g., aluminum-lithium alloys), titanium, nickel, nickel alloys, and other metals and alloys known in the art. Polymeric powders compatible with typical PBF systems **20** include a wide variety of polymers as known in the art.

### Discussion of Possible Embodiments

The following are non-exclusive descriptions of possible embodiments of the present invention.

According to a first aspect of the invention, a PBF additive manufacturing system comprises an annular build plate including an inner radius wall and an outer radius wall, which define a build area on the annular build plate. A build piston is configured to rotate around a drive shaft in a continuous circular motion and to translate up and down with respect to the annular build plate, such that the annular build plate is configured to be positioned on the build piston and to move in concert with the build piston. A build powder delivery mechanism is configured to deliver build powder to the build area to form a build powder bed when the PBF additive manufacturing system is in operation. A recoater configured to provide even distribution of the build powder in the build powder bed when the PBF additive manufacturing system is in operation. An optical array is positioned over the build area on the build plate, such that the optical array is configured to project energy onto the build powder bed to form a melt pool in the build powder bed when the PBF additive manufacturing system is in operation. An integrated X-ray CT system positioned operationally downstream from the optical array, such that the integrated X-ray CT system is configured to inspect a part formed on the build plate when the PBF additive manufacturing system is in operation.

The PBF additive manufacturing system of the preceding paragraph can optionally include, additionally and/or alternatively, any one or more of the following features, configurations and/or additional elements:
A further embodiment of the foregoing PBF additive manufacturing system, wherein the integrated X-ray CT system comprises an X-ray scan head and an X-ray detector is configured to inspect a part formed on the build plate when the PBF additive manufacturing system is in operation.

A further embodiment of the foregoing PBF additive manufacturing system, wherein the X-ray scan head is positioned on an outer diameter of the annular build plate and the X-ray detector is positioned on an inner diameter of the annular build plate such that a linear path between the X-ray scan head and the X-ray detector intersects the part.

A further embodiment of the foregoing PBF additive manufacturing system, wherein the X-ray scan head is configured to direct X-ray energy through the part to the X-ray detector and the X-ray detector is configured to receive X-ray energy as it exits the part to form an image of part that can be examined for defects in the part when the PBF additive manufacturing system is in operation.

A further embodiment of any of the foregoing PBF additive manufacturing systems, wherein the optical array comprises a plurality of individual energy sources distributed radially over the build area of the build plate such that the individual energy sources irradiate overlapping portions of the build area.

A further embodiment of the foregoing PBF additive manufacturing system, wherein the plurality of individual energy sources comprises a plurality of lasers.

A further embodiment of the foregoing PBF additive manufacturing system, wherein the plurality of individual energy sources comprises a plurality of electron beam sources.

According to another aspect of the invention, a method of making an annular part with a PBF additive manufacturing system comprises installing in the PBF additive manufacturing system an annular build plate including an inner radius wall and an outer radius wall, which define a build area on the annular build plate. Build powder is delivered, with a powder delivery mechanism, to the build area to form a build powder bed while the build plate rotates. The build powder in the build powder bed is distributed, with a recoater, to provide even distribution of the build powder in the build powder bed while the build plate rotates. Energy is directed, from an optical array positioned over the build area on the build plate, to the build powder in the build powder bed to form a melt pool in the build powder bed while the build plate rotates. Build powder from the melt pool is selectively sintered, using energy from the optical array, to form a layer of a consolidated part while the build plate rotates. The consolidated part is inspected, with an integrated X-ray CT system, in situ as it forms.

The method for making an annular part of the preceding paragraph can optionally include, additionally and/or alternatively, any one or more of the following features, configurations and/or additional elements:
A further embodiment of the foregoing method, wherein the integrated X-ray CT system comprises an X-ray scan head and an X-ray detector.

A further embodiment of the foregoing method, wherein the X-ray scan head is positioned on an outer diameter of the annular build plate and the X-ray detector is positioned on an inner diameter of the annular build plate such that a linear path between the X-ray scan head and the X-ray detector intersects the part.

A further embodiment of either of the foregoing methods, further comprising directing, by the X-ray scan head, X-ray energy through the part to the X-ray detector; receiving, by the X-ray detector, X-ray energy as it exits the part; forming, by the X-ray detector, an image of part; and examining the part for defects.

A further embodiment of the foregoing method, wherein examining the part for defects is performed manually.

A further embodiment of the foregoing method, wherein examining the part for defects is performed automatically.

A further embodiment of the foregoing method, wherein if the part includes defects, the integrated X-ray CT system presents options to an operator.

A further embodiment of the foregoing method, wherein the options include: varying operating parameters of the PBF additive manufacturing system to include one or more of power to individual energy sources, rotational speed and/or height of the annular build plate, translation of the build head, operation of the powder dispensing mechanism, and operation of the powder heating element; or terminating operation of the PBF additive manufacturing system build campaign and manually reworking the part; or terminating operation of the PBF additive manufacturing system build campaign and scrapping the part.

A further embodiment of the foregoing methods, wherein the plurality of individual energy sources comprises a plurality of lasers.

A further embodiment of the foregoing methods, wherein the plurality of individual energy sources comprises a plurality of electron beam sources.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A powder bed fusion (PBF) additive manufacturing system comprising:
an annular build plate (22) including an inner radius wall (26a) and an outer radius wall (26b), wherein the inner radius wall (26a) and the outer radius wall (26b) define a build area (26c) on the annular build plate (22) between the inner radius wall (26a) and the outer radius wall (26b);
a build piston (28) configured to rotate around a drive shaft (30) in a continuous circular motion and to translate up and down with respect to the annular build plate (22), wherein the annular build plate (22) is configured to be positioned on the build piston (28) and to move in concert with the build piston (28);
a build powder delivery mechanism configured to deliver build powder to the build area (26c) to form a build powder bed (50) when the PBF additive manufacturing system (20) is in operation;
a recoater (42) configured to provide even distribution of the build powder in the build powder bed (50) when the PBF additive manufacturing system (20) is in operation;
an optical array (48) positioned over the build area (26c) on the build plate (22), wherein the optical array (48) is configured to project energy onto the build powder bed (50) to form a melt pool in the build powder bed (50) when the PBF additive manufacturing system (20) is in operation; and
an integrated X-ray CT system (34) positioned operationally downstream from the optical array (48), wherein the integrated X-ray CT system (34) is configured to inspect a part (24) formed on the build plate (22) when the PBF additive manufacturing system (20) is in operation.

2. The PBF additive manufacturing system (20) of claim 1, wherein the integrated X-ray CT system (34) comprises an X-ray scan head (34a) and an X-ray detector (34b) is configured to inspect a part (24) formed on the build plate (22) when the PBF additive manufacturing system (20) is in operation.

3. The PBF additive manufacturing system (20) of claim 2, wherein the X-ray scan head (34a) is positioned on an outer diameter of the annular build plate (22) and the X-ray detector (34b) is positioned on an inner diameter of the annular build plate (22) such that a linear path between the X-ray scan head (34a) and the X-ray detector (34b) intersects the part (24).

4. The PBF additive manufacturing system (20) of claim 3, wherein the X-ray scan head (34a) is configured to direct X-ray energy through the part (24) to the X-ray detector (34b) and the X-ray detector (34b) is configured to receive X-ray energy as it exits the part (24) to form an image of part (24) that can be examined for defects in the part (24) when the PBF additive manufacturing system (20) is in operation.

5. The PBF additive manufacturing system (20) of any preceding claim, wherein the optical array (48) comprises a plurality of individual energy sources (48a-n) distributed radially over the build area (26c) of the build plate (22) such that the individual energy sources (48a-n) irradiate overlapping portions of the build area (26c).

6. The PBF additive manufacturing system (20) of claim 5, wherein the plurality of individual energy sources (48a-n) comprises a plurality of lasers.

7. The PBF additive manufacturing system (20) of claim 5, wherein the plurality of individual energy sources (48a-n) comprises a plurality of electron beam sources.

8. A method of making an annular part (24) with a powder bed fusion (PBF) additive manufacturing system, comprising:
installing in the PBF additive manufacturing system (20) an annular build plate (22) including an inner radius wall (26a) and an outer radius wall (26b), wherein the inner radius wall (26a) and the outer radius wall (26b) define a build area (26c) on the annular build plate (22) between the inner radius wall (26a) and the outer radius wall (26b);
delivering, with a powder delivery mechanism, build powder to the build area (26c) to form a build powder bed (50) while the build plate (22) rotates;
distributing, with a recoater (42), the build powder in the build powder bed (50) to provide even distribution of the build powder in the build powder bed (50) while the build plate (22) rotates;
directing energy, from an optical array (48) positioned over the build area (26c) on the build plate (22), to the build powder in the build powder bed (50) to form a melt pool in the build powder bed (50) while the build plate (22) rotates;
selectively sintering, using energy from the optical array (48), build powder from the melt pool to form a layer of a consolidated part (24) while the build plate (22) rotates; and
inspecting, with an integrated X-ray CT system (34), the consolidated part (24) in situ as it forms.

9. The method of making an annular part (24) of claim 8, wherein the integrated X-ray CT system (34) comprises an X-ray scan head (34a) and an X-ray detector (34b).

10. The method of making an annular part (24) of claim 9, wherein the X-ray scan head (34a) is positioned on an outer diameter of the annular build plate (22) and the X-ray detector (34b) is positioned on an inner diameter of the annular build plate (22) such that a linear path between the X-ray scan head (34a) and the X-ray detector (34b) intersects the part (24).

11. The method of making an annular part (24) of claim 9 or 10, further comprising:
directing, by the X-ray scan head (34a), X-ray energy through the part (24) to the X-ray detector (34b);
receiving, by the X-ray detector (34b), X-ray energy as it exits the part (24);
forming, by the X-ray detector (34b), an image of part (24); and
examining the part (24) for defects.

12. The method of making an annular part (24) of claim 11, wherein examining the part (24) for defects is performed manually.

13. The method of making an annular part (24) of claim 11, wherein examining the part (24) for defects is performed automatically.

14. The method of making an annular part (24) of claim 11, wherein if the part (24) includes defects, the integrated X-ray CT system (34) presents options to an operator.

15. The method of making an annular part (24) of claim 14, wherein the options include:
varying operating parameters of the PBF additive manufacturing system (20) to include one or more of power to individual energy sources (48a-n), rotational speed and/or height of the annular build plate (22), translation of the build head (32), operation of the powder dispensing mechanism (40), and operation of the powder heating element (44);
terminating operation of the PBF additive manufacturing system (20) build campaign and manually reworking the part (24); and/or
terminating operation of the PBF additive manufacturing system (20) build campaign and scrapping the part (24), optionally wherein:
the plurality of individual energy sources (48a-n) comprises a plurality of lasers; or
the plurality of individual energy sources (48a-n) comprises a plurality of electron beam sources.
